## Europäisches Patentamt
## European Patent Office
## Office européen des brevets

(11) Veröffentlichungsnummer: **0 162 121**
**B1**

(12) **EUROPÄISCHE PATENTSCHRIFT**

(45) Veröffentlichungstag der Patentschrift:
**24.02.88**

(21) Anmeldenummer: **84105730.0**

(22) Anmeldetag: **19.05.84**

(51) Int. Cl.⁴: **C 02 F 3/06**, C 02 F 3/12, C 02 F 3/20, C 02 F 3/10, C 02 F 3/30

(54) Klärbecken für die biologische Reinigung von Abwässern.

(43) Veröffentlichungstag der Anmeldung:
**27.11.85 Patentblatt 85/48**

(45) Bekanntmachung des Hinweises auf die Patenterteilung:
**24.02.88 Patentblatt 88/8**

(84) Benannte Vertragsstaaten:
**AT BE CH FR LI LU NL**

(56) Entgegenhaltungen:
**DE-A-2 558 105**
**DE-A-2 752 190**
**FR-A-1 256 076**
**US-A-4 190 543**

(73) Patentinhaber: **Universal Gesellschaft für Umwelttechnik mbH, Rudolf- Diesel- Weg 4, D-2410 Mölln (DE)**

(72) Erfinder: **Mauss, Mathias, Dipl.- Ing., Viersener Strasse 157, D-4154 Tönisvorst 1 (DE)**

(74) Vertreter: **Döring, Rudolf, Dr.- Ing., Patentanwälte Dr.- Ing. R. Döring Dipl.- Phys. Dr. J. Fricke Jasperallee 1a, D-3300 Braunschweig (DE)**

LIBER, STOCKHOLM 1988

EP 0 162 121 B1

## Beschreibung

Die Erfindung betrifft ein Klärbecken für die biologische Reinigung von Abwässern mit einem Zu- und Ablauf für das Wasser, einem bodenseitigen Absetz- und Schlammraum und oberhalb dieses Raumes angeordneten, quer zur Strömungsrichtung des Wassers sowie parallel zueinander verlaufenden, etwa von Wand zu Wand reichenden Lufteintragsrohren oder -kerzen.

Es sind Klärbecken vorgenannter Art bekannt (US-A-3 234 123), in deren unterem Bereich, also im Absetz- und Schlammraum, eine im wesentlichen anaerobe Behandlung des Abwassers erfolgt, während das Wasser oberhalb dieses Raumes einer aeroben Behandlung unterworfen wird. Bei der bekannten Anordnung ist dabei nur ein Teil des Beckens, nämlich der einströmseitige, mit einem unterhalb der Lufteintragsrohre vorgesehenen Absetz- und Schlammraum ausgerüstet, während der abströmseitige Teil eine geringere Tiefe aufweist und mit im Beckenboden angeordneten Lufteintragsrohren versehen ist. In dem Bereich oberhalb der Lufteintragsrohre soll zwischen benachbarten Rohren durch die in dem Wasser aufsteigenden Luftbläschen eine Zirkulationsströmung erzeugt werden, bei der das Wasser im Bereich der aufsteigenden Luftbläschen mit nach oben gerissen wird, während es in der Mittelebene zwischen zwei benachbarten Rohren wieder nach unten fließt und durch die Auftriebsströmung im Bereich unmittelbar oberhalb der Rohre wiederum zu den Rohren umgelenkt wird.

Die bekannte Ausbildung des Klärbeckens ist nicht nur baulich verhältnismäßig aufwendig, sondern wegen der ausschließlich durch die aufströmenden Luftbläschen erzeugten internen Umlaufströmungen nur für größere Anlagen mit einer verhältnismäßig langen Verweildauer des zugeführten Abwassers in dem Becken geeignet, um eine hinreichende und gleichmäßig verteilte Sauerstoffaufnahme zu gewährleisten, welche für den aeroben Abbau der Verunreinigungen in dem Wasser erforderlich ist.

Für die Reinigung von Abwässern, welche nur in kleineren Mengen, beispielsweise von einem einzigen Wohnhaus, bis zu wenigen hundert E/EGW anfallen, wurden bisher nur Faul- und Ausfaulgruben nach DIN 4261 verwendet, die jedoch nur zur biologischen Teilreinigung dienen, oder aber man hat biologisch vollreinigende kleine Kompaktklärwerke gebaut, die jedoch wegen der im Vergleich zu Großkläranlagen notwendigen Verkleinerung der einzelnen Elemente zu technischen Problemen führen und eine dauernde Wartung durch fachmännisches Personal erfordern.

Aufgabe vorliegender Erfindung ist es, ein Klärbecken der einleitend beschriebenen Art so auszubilden, daß es gegenüber den eingangs beschriebenen Ausbildungsformen auch bei kleinen Abmessungen und einem Anfall des Abwassers in der vorstehend beschriebenen Größenordnung bis zu einigen hundert E/EGW eine biologische Vollreinigung des Abwassers ggf. in Verbindung mit einer Vorklärung ermöglicht und ohne Wartungsaufwand eine sichere Funktion gewährleistet.

Zur Lösung vorstehender Aufgabe kennzeichnet sich das genannte Klärbecken erfindungsgemäß dadurch, daß in dem Raum oberhalb der Lufteintragsrohre oder -kerzen parallel zu den Rohren und parallel zueinander angeordnete, von Beckenwand zu Beckenwand reichende Trennwände vorgesehen sind, die sich von dem Bereich der Rohre bis zu dem Bereich der oberen Niveau- oder Überlaufebene des Wassers erstrecken und wenigstens abschnittsweise gegenüber der Lotrechten von unten nach oben gesehen gegen die Einströmrichtung des Wassers geneigt verlaufen, und daß die Lufteintragsrohre oder -kerzen zur Erzeugung einer solchen Strömung des Abwassers zwischen den Trennwänden ausgebildet sind, daß eine Schlammbildung auf den Trennwänden und ein Absinken des abgebauten Schlammes erreicht wird.

Bei der vorgenannten Ausbildung wird während des Betriebes eine Umlaufströmung und Turbulenz in den oberhalb der Lufteintragsrohre oder -kerzen befindlichen Räumen zwischen Trennwänden und damit eine günstige Sauerstoffausnutzung erreicht, und es bildet sich dabei auf den Trennwänden, soweit sie gegenüber der Lotrechten geneigt verlaufen, in denjenigen Bereichen, die von dem mit Luft durchsetzten bzw. mit Sauerstoff angereicherten Abwasser angeströmt werden, ein überwiegend aerob wirksamer biologischer Rasen. In den anderen nicht unmittelbar angeströmten bzw. im Strömungsschatten liegenden Bereichen entsteht zwar auch ein biologischer Rasen, welcher jedoch eine anaerob-aerobe Mischkultur darstellt. Dabei wird durch die eingetragene Luft das Abwasser zwischen den Trennwänden in stetiger Bewegung gehalten und unterhalb dieser Wände nur sehr gering bewegt, so daß sich dort der Sekundärschlamm absetzen kann. Dieser bildet auch eine anaerob-aerob wirksame biologische Reinigungssubstanz, durch welche der biologische Abbau der in dem Abwasser enthaltenen Schmutz- und Schadstoffe unterstützt wird.

Es wird somit auf verhältnismäßig kleinem Raum eine sehr wirksame aerobe und anaerobe Behandlung des Abwassers und damit ein außerordentlich günstiger biologischer Reinigungseffekt erzielt.

Durch eine entsprechende Anordnung der Lufteintragsrohre bzw. -kerzen und durch die Wahl der Anzahl sowie Größe und Verteilung der Luftaustrittsöffnungen in diesen Rohren oder der Porosität der Kerzen kann die Intensität der Umlaufströmung und Turbulenz des Wassers so eingestellt werden, daß eine Schlammbildung auf den Trennwänden erfolgt bei Entstehung stärkerer Schlammablagerungen, deren Ablösung durch die Strömung erreicht und ein Absinken dieses abgelösten Schlammes erzielt wird. Dabei bilden die Schlammpartikel nach dem Absinken in den Raum unterhalb der Lufteintragsrohre oder -kerzen den bereits genannten Sekundärschlamm. Um im Bereich des Schlamm- und Absetzraumes die Wasserbewegungen gering zu halten, ist es erforderlich, die Höhe dieses Absetzraumes entsprechend groß zu bemessen.

Da die Trennwände von Beckenwand zu Beckenwand reichen, werden seitliche Umströmungen der Trennwände mit Sicherheit vermieden.

Die Trennwände können in einfachster Weise als ebene Trennwände ausgebildet sein und eine Neigung zweckmäßig von etwa 20 bis zu etwa 45° zur Lotrechten aufweisen. Bei Dieser Ausbildung ergeben sich zwar keine ausgesprochenen Flächen oder Flächenabschnitte, welche im Strömungsschatten des Wassers liegen, jedoch werden die nach unten auf die Lufteintragsrohre oder -kerzen weisenden Flächen der Trennwände von dem mit Luft bzw. Sauerstoff angereicherten Wasser intemsiver angeströmt, so daß sich dort ein aerob wirkender biologischer Rasen bilden kamm, während auf den anderen nicht oder nur wenigerintensiv angeströmten Flächen der Trennwände die bereits genannte anaerob-aerobe Mischkultur des biologischen Rasens entsteht.

Besonders zweckmäßig ist es, wenn die Trennwände profiliert oder gewellt so ausgebildet sind, daß sie horizontal verlaufende rinnenförmige Vertiefungen aufweisen. Bei einer solchen Ausbildung der Trennwände ergeben sich ausgeprägte Flächenbereiche, die im Strömungsschatten liegen, und andere, welche intensiver von dem Wasser bzw. dem Wasserluftgemisch angeströmt werden. Dabei ist es besonders günstig, wenn auch die vorgenannten profilierte oder gewellten Trennwände bis zu etwa 45° geneigt zur Lotrechten angeordnet werden, weil hierdurch eine bessere Anströmung der gegen die Strömungsrichtung weisenden Flächen bzw. Flächenabschnitte der Platten erfolgt und somit eine intensive Sauerstoffausnutzung erreicht wird, während andererseits, insbesondere an den in Strömungsrichtung weisenden Flächen, die bereits genannte anaerob-aerobe Mischkultur des biologischen Rasens entsteht. Sowohl durch die geneigte Anordnung als auch durch die profilierte bzw. gewellte Ausbildung der Trennwände wird bei geringem Raumbedarf die Unterbringung großer Trennwandflächen in dem Klärbecken erreicht.

Vorteilhaft ist es, wenn die Trennwände etwa den gleichen Abstand voneinander aufweisen und jeweils zwei Trennwände zwischen je zwei benachbarten Rohren angeordnet sind.

Hierdurch entsteht in den oberhalb der Lufteintragsrohre befindlichen Räumen zwischen den Trennwänden eine Aufwärtsströmung, während in den Machbarräumen eine ausgeprägte Abwärtsströmung zur Wirkung kommt, so daß sich eine Umlaufströmung durch benachbarte Räume einerseits und eine überlagerte mäanderförmige Strömung andererseits durch die gesamte Trennwandanordnung ausbilden können. Auf diese Weise werden lange Strömungswege des Wassers auf kleinem Raum bei günstiger Sauerstoffausnutzung erzielt. In Verbindung mit den genannten profilierten bzw. gewellten sowie geneigten Trennwänden ergeben sich stetig angeströmte Bereiche der Trennwandflächen sowie bleibend im Strömungsschatten liegende Trennwandabschnitte, so daß sich bereichsweise der unterschiedlich wirkende biologische Rasen gut ausbilden kann.

Besonders günstige Verhältnisse bei der Zuströmung und auch bei der Abströmung des Wassers ergeben sich, wenn die Trennwände, von unten nach oben gesehen, gegen die Einströmrichtung des Wassers in das Klärbecken geneigt verlaufen.

Die Anordnung der Lufteintragsrohre oder -kerzen erfolgt zweckmäßig im Bereich oberhalb der unteren Enden der Trennwände, um eine Umströmung der unteren Ränder der Trennwände auf kurzem Wege ohne die Erzeugung einer Strömung im Absetz- und Schlammraum zu begünstigen.

Die Trennwände werden zweckmäßig so angeordnet, daß sie wechselweise oberhalb und unterhalb der oberen Niveau- oder Überlaufebene des Wassers enden. Vom Einlauf des Wassers in das Becken aus gesehen kann z. B. jede zweite Trennwand oberhalb und die jeweils dazwischenliegende Trennwand unterhalb der oberen Niveau- oder Überlaufebene des Wassers enden. Auf diese Weise wird eine Kurzschlußströmung im Bereich der oberen Niveau- oder Überlaufebene des Wassers mit Sicherheit vermieden.

Besonders günstige Strömungsverhältnisse im unteren Bereich der Trennwände werden erreicht, wenn die oberhalb der Niveau- oder Überlaufebene endenden Trennwände in Höhe der Lufteintragsrohre oder -kerzen enden und die unterhalb der Niveau- oder Überlaufebene endenden Trennwände die Lufteintragsrohre oder -kerzen nach unten hin überragen. Bei Anwendung der beiden letztgenannten Maßnahmen wird durch die unterschiedliche Lage der oberen bzw. unteren Enden der Trennwände eine zwangsweise mäanderförmige Durchströmung der zwischen den Trennwänden befindlichen Strömungsräume erreicht.

Zwischen der in Strömungsrichtung letzten Trennwand und dem Ablauf ist vorteilhafterweise eine parallel zu den Trennwänden angeordnete Umlenkwand vorgesehen. Hierdurch erfolgt nicht nur eine günstige Ausnutzung auch der in Strömungsrichtung letzten Trennwand, sondern bei der beschriebenen geneigten Anordnung der Trennwände gegen die Einströmrichtung ergibt sich zwischen der Umlenkwand und der benachbarten Beckenwand ein sich nach oben hin erweiternder Beruhigungs- und Nachklärraum, den das behandelte Abwasser durchströmen muß, ehe es in die Überlaufebene gelangt.

Die Trennwände und die Lufteintrittsrohre oder -kerzen bilden vorzugsweise eine in das Becken eintauchbare und herausnehmbare Einheit, welche den Beckenabmessungen entsprechend vorgefertigt werden kann. Mit Hilfe derartiger Einheiten können auch bereits vorhandene Becken umgerüstet werden.

Eine besonders vorteilhafte Ausführung ergibt sich, wenn das Becken als Kammer eines Doppelkammerbeckens ausgebildet ist und mit einer vorgeordneten Vorklär- und Absetzkammer über den Einlauf in offener Verbindung steht. Derartige Doppelkammerbecken können zusammen mit den Trennwänden und Lufteintragsrohren sowie ggf. auch mit den erforderlichen Drucklufterzeugern zum Anschluß an die Lufteintragsrohre oder -kerzen vorgefertigt werden.

Die Zeichnung gibt in schematischer Darstellung bevorzugte Ausführungsbeispiele der Erfindung wieder.

Es zeigen:

Fig. 1 den Längsschnitt durch ein Klärbecken, bei welchem durch eine Bruchlinie getrennt zwei verschiedene Ausbildungsformen der Erfindung wiedergegeben sind,

Fig. 2 den Längsschnitt durch eine von der Figur abweichende Ausbildungsform des Klärbeckens,

Fig. 3 einen Schnitt entlang der Schnittlinie III-III durch das Becken nach Fig. 1.

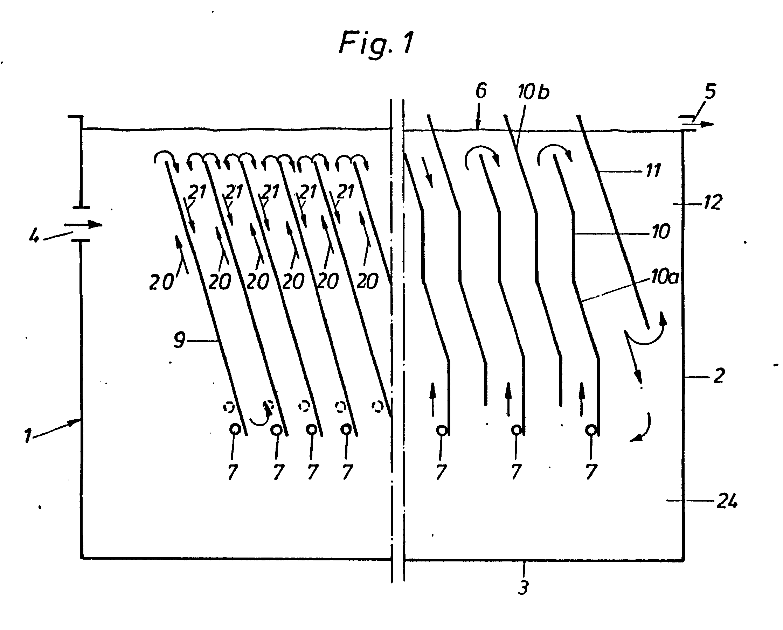

Das insgesamt mit 1 bezeichnete Klärbecken gemäß der Fig. 1 weist äußere Umfangswandungen 2 und einen hiermit verbundenen Boden 3 auf. Die Wandungen 2 und der Boden 3 können dabei aus Metall oder Kunststoff sowie auch aus Beton bestehen. In der Außenwandung 2 des Beckens sind eine Zulauföffnung 4 für das zuzuführende Abwasser und eine Ablauföffnung 5 erkennbar. Die Zulauföffnung 4 ist dabei unterhalb der Niveau- oder Überlaufebene 6 angeordnet, während die Ablauföffnung 5 als Überlauföffnung in Höhe der vorgenannten Niveau- oder Überlaufebene angeordnet ist.

Das Becken gemäß Fig. 1 weist einen bodenseitigen Absetz- und Schlamm- bzw. Schlammsammelraum 24 auf, welcher sich in diesem Ausführungsbeispiel etwa über ein Drittel der Gesamthöhe des Beckens erstreckt und frei von Einbauteilen ist. Oberhalb des Absetz- und Schlammraumes 24 sind in dem Becken 1 quer zur Strömungsrichtung des Wassers von der Zulauföffnung 4 zu der Ablauföffnung 5 parallel zueinander verlaufende und etwa von Wand zu Wand reichende Lufteintragsrohre 7 vorgesehen, welche mit einer in den Figuren nicht wiedergegebenen Druckluftquelle verbindbar sind. In dem Raum oberhalb der Lufteintragsrohre 7 sind etwa vom Bereich der Rohre ausgehende bis in den Bereich der Niveau-oder Überlaufebene 6 reichende Trennwände vorgesehen, die im linken Teil der Fig. 1 als ebene Trennwände 9 ausgebildet sind und etwa 30° geneigt zur Lotrechten verlaufen, während sie im rechten Teil der Fig. 1 als Trennwände 10 mit abschnittsweise gegenüber der Lotrechten geneigt verlaufenden Bereichen ausgeführt sind.

Die Trennwände reichen dabei von Beckenwand zu Beckenwand, so daß eine seitliche Umströmung der Trennwände durch das Abwasser nicht möglich ist.

Im Falle des linken Teiles der Fig. 1 befindet sich vor der in Anströmrichtung ersten Trennwand 9 sowie weiterhin zwischen den etwa im Abstand der Belüftungsrohre 7 angeordneten Trennwänden jeweils ein Lufteintragsrohr 7. Bei Beaufschlagung der Lufteintragsrohre mit Druckluft wird infolge der aus den Eintragsrohren austretenden Luftbläschen eine Aufwärtsströmung des zugeführten Abwassers erzeugt, die im wesentlichen entlang den nach unten bzw. in Richtung der Zulauföffnung 4 weisenden Flächen der Trennwände 7, also im Bereich und in Richtung der Pfeile 20 verläuft. Das aufwärtsströmende Wasser wird am oberen Ende der Trennwände 9 teils zu einer internen Umlaufströmung innerhalb des gleichen Raumes und teils nach Umströmung der oberen Kante der Trennwand in den in Strömungsrichtung nächsten Raum zwischen den Trennwänden 9 geleitet und strömt im wesentlichen entlang den nach oben weisenden bzw. in Richtung der Auslauföffnung 5 weisenden Flächen der Trennwände 9 gemäß den Pfeilen 21 in den Bereich der Lufteintragsrohre 7, um dort wieder zur Aufwärtsströmung umgelenkt zu werden.

Es entsteht bei dieser Anordnung, bei welcher die Trennwände 9 sämtlich bis unterhalb der oberen Niveau- oder Überlaufebene 6 reichen, eine interne Umlaufströmung zwischen den benachbarten Trennwänden einerseits und einer Überlaufströmung mit einer verhältnismäßig langen durchschnittlichen Verweilzeit des Wassers, bis es aus dem Überlaufrohr 5 wieder austritt.

Auf den nach unten bzw. in Richtung zur Zuströmöffnung 4 weisenden Flächen der Trennwände 9 bildet sich infolge des aufwärtsströmenden und mit Sauerstoff angereicherten Abwassers ein biologischer aerober Rasen, während auf den gegenüberliegenden Flächen der Trennwände eine gewisse Ablagerung erfolgt, so daß sich dort ein gemischter aerob-anaerober biologischer Rasen bildet, wobei diese Ablagerungen von einer bestimmten Schichtstärke ab durch die Strömung in Richtung der Pfeile 21 mitgenommen werden und in den Schlamm- bzw. Absetzraum 24 überführt werden.

Die Anordnung der Luftzuführungsrohre 7 kann entsprechend der gestrichelten Darstellung im linken Teil der Fig. 1 auch oberhalb der unteren Enden der Trennwände 9 erfolgen, um die Auswirkungen der angestrebten Strömungsbewegungen auf das in dem Schlamm- bzw. Absetzraum 24 befindliche Abwasser und den dort sich ablagernden Schlamm möglichst gering zu halten.

Bei den im rechten Teil der Fig. 1 wiedergegebenen Trennwänden 10 ist eine Ausbildung dargestellt, bei welcher die Trennwände nur abschnittsweise, nämlich im Bereich der Abschnitte 10a und 10b, geneigt verlaufen, während die Zwischenbereiche dieser Trennwände eine lotrechte Stellung einnehmen. Dabei sind die in Strömungsrichtung jeweils zweiten Trennwände 10 nach oben hin länger ausgebildet, so daß sie bis oberhalb der oberen Niveau- oder Überlaufebene 6 ragen, während die dazwischenliegenden Trennwände unterhalb der vorgenannten Niveau- oder Überlaufebene 6 enden. Im unteren Bereich sind die nach oben überstehenden Trennwände dagegen verkürzt ausgebildet. Die bis unterhalb der Niveau- oder Überlaufebene 6 ragenden Trennwände 10 erstrecken sich nach unten bis in die Höhe der Lufteintragsrohre 7. Bei dieser Anordnung gemäß dem rechten Teil der Fig. 1 sind jeweils zwei Trennwände 10 zwischen je zwei benachbarten Lufteintragsrohren 7 angeordnet.

Durch die vorgenannte Ausbildung und Anordnung der Trennwände sowie der Lufteintragsrohre 7 wird das zufließende Abwasser gezwungen, entlang den dargestellten Pfeilen mäanderförmig durch die von den Trennwänden 10 begrenzten Räume zu fließen, wobei es durch den Lufteintrag in der Aufwärtsströmung jeweils sauerstoffangereichert ist und an den von dieser Aufwärtsströmung angeströmten Flächen der Trennwände 10, also insbesondere im Bereich der Flächen 10a und 10b, zur Bildung eines aerob wirkenden biologischen Rasens führt, während im Bereich der Strömungsschatten und auf den Flächen der Trennwände 10, welche die Abwärtsströmung begrenzen, im wesentlichen eine anaerob-aerobe Mischkultur des biologischen Rasens entsteht, wie dies bereits im Zusammenhang mit dem linken Teil der Fig.1 beschrieben wurde.

Zwischen der in Strömungsrichtung letzten Trennwand 10 und der Ablauföffnung 5 ist eine parallel zu den Trennwänden 10 angeordnete Umlenkwand 11 vorgesehen, welche von dem zum Ablauf fließenden Wasser umströmt werden muß. Zwischen der Umfangswandung 2 und der Umlemkwand 10 entsteht ein Beruhigungs- und Nachklärraum 12, welchen das Wasser durchströmen muß, ehe es zu der Auslauföffnung 5 gelangen kann.

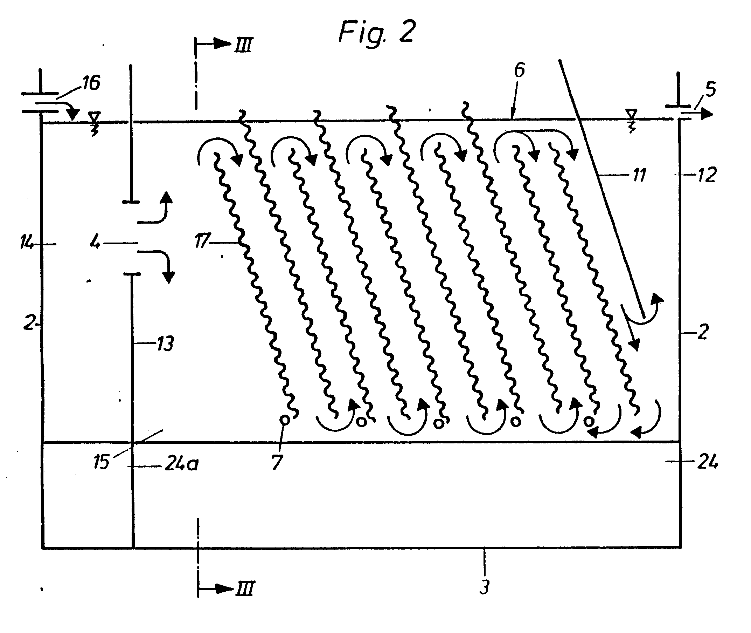

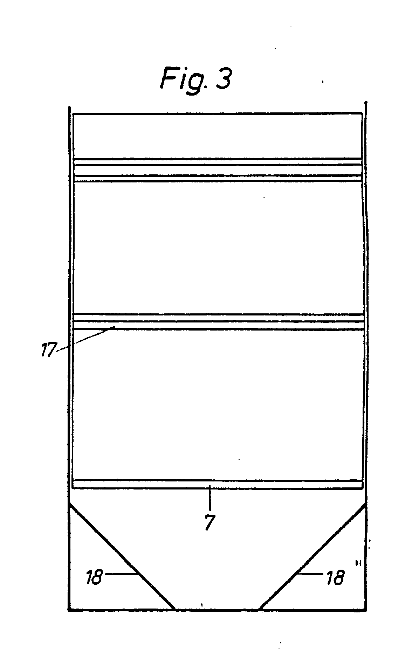

Bei der Ausbildung des Klärbeckens nach den Fig. 2 und 3 umschließen die Wandungen 2 und der Boden 3 zwei voneinander durch eine Wandung 13 getrennte Kammern 14 und 15, wobei die Kammer 14 eine Absetz- und Vorklärkammer bildet. Der Kammer 14 wird das Abwasser durch einen Zulauf 16 zugeleitet. Nach Absinken der spezifisch schwereren Feststoffe in der Kammer 14 gelangt das Abwasser durch die Zuströmöffnung 4 im der Trennwand 13 in die Kammer 15. Die Kammer 15 ist in diesem Beispiel der Fig. 2 und 3 mit gewellten Trennwänden 17 ausgerüstet, die in Übereinstimmung mit den Trennwänden 10 im linken Teil der Fig. 1, von unten nach oben gesehen, gegen die Einströmrichtung des Abwassers geneigt verlaufen. In dem unteren Bereich der Trennwände befinden sich wiederum Lufteinlaßrohre 7, wobei in Übereinstimmung mit dem rechten Teil der Fig. 1 zwischen jeweils zwei benachbarten Rohren 7 zwei parallel verlaufende Trennwände angeordnet sind, von denen die eine jeweils bis über die obere Niveau- oder Überlaufebene ragt, so daß das Abwasser durch die Kammer 15 zwischen den Trennwänden hindurch entlang den eingetragenen Pfeilen mäanderförmig hindurchssrömen muß, ehe es zu der Ablauföffnung 5 gelangt. Wie in dem rechten Teil der Fig. 1 ist auch bei der Anordnung nach Fig. 2 und 3 zwischen der in Strömungsrichtung letzten Trennwand 17 und der Ablauföffnung 5 eine Umlenkwand 11 vorgesehen, welche den Nachklärraum 12 zwischen dieser Wandung und der Umfangswand 2 des Beckens begrenzt.

Aus der Fig. 3 ist ersichtlich, daß der Absetz- bzw. Schlammraum 24 bzw. der in der Kammer 14 befindliche Schlammraum 24a durch geneigte Seitenwandungen 18 begrenzt ist, um den allerdings nur in großen Zeitabständen notwendigen Austrag des Schlammes zu vereinfachen.

Die Wellen der Trennwände 17 verlaufen, wie aus den Fig. 2 und 3 ersichtlich ist, in horizontaler Richtung und bilden damit auch entsprechende horizontal verlaufende Rinnen.

Durch die gewellte Ausbildung ergeben sich besonders großflächige Trennwände, auf denen sich an den der Aufwärtsströmung und zum überwiegenden Teil auch der Abwärtsströmung zugewandten Abschnitten der Platten bzw. Wellen ein aerob wirkender biologischer Rasen bildet, während an den im Strömungsschatten befindlichen Bereichen der Wellen ein aerobanaerob wirkender biologischer Rasen entsteht. Der biologische Rasen bleibt mit dem Abwasser in ständiger Berührung und übernimmt in Verbindung mit dem am Beckenboden lagernden Schlamm die Reinigungsarbeit.

Die Anordnung und Ausbildung der Lufteintragsrohre 7 sowie die Länge und Stellung der Trennwände 17 in bezug auf die Lufteintragsrohre und die obere Niveau- bzw. Überlaufebene kann abweichend von der Fig. 2 auch in der Weise erfolgen, wie es in dem Beispiel der Fig. 1 in der linken bzw. rechten Hälfte wiedergegeben ist. Die Lufteintragsrohre 7 können also oberhalb der unteren Enden der Trennwände 17 angeordnet sein, die ihrerseits an ihren oberen Enden auch in gleicher Höhe unterhalb der oberen Niveau- bzw. Überlaufebene 6 enden können, wenn eine mäanderförmige Zwangsdurchströmung der Trennwandanordnung nicht für erforderlich gehalten wird.

Im Falle der Ausbildung gemäß Fig. 2 sind die beiden in Strömungsrichtung letzten Trennwände 17 so ausgebildet, daß sie beide unterhalb der oberen Niveau- bzw. Überlaufebene 6 enden. In Verbindung mit der Umlenkwand 11 wird hierdurch eine Umwälzung des Abwassers im Endbereich auch ohne einen Wasserzulauf erreicht, so daß bis zum Absenken des Wasserspiegels auf die Höhe der oberen Enden der beiden genannten Trennwände ein Wasserumlauf gewährleistet bleibt.

Wenn über längere Zeitspannen kein Abwasser zugeführt wird, so erfolgt eine Umwandlung des in dem Schlammraum 24 befindlichen Sekundärschlammes, der dann als Nährstoff für die Bakterien dient, bis erneut die Zuführung von Abwasser erfolgt und die Anordnung wieder in der beschriebenen Weise mit der durch den Lufteintrag erzeugten Umlaufströmung bzw. mäanderförmigen Durchströmung der zwischen den Trennwänden befindlichen Räume arbeitet.

Die Lufteintragsrohre 7 können mit den Trennwänden 9 bzw. 10 oder 17 eine oder mehrere Baueinheiten bilden, welche den jeweiligen Beckenabmessungen angepaßt und für den Betrieb in die Becken eingehängt werden, während sie bei Wartungsarbeiten oder bei Reinigung des Beckens sowie beim Schlammaustrag aus dem Becken herausgehoben werden können.

Neben der kompakten Bauweise ist für den Betrieb des beschriebenen Klärbeckens nur ein außerordentlich geringer maschinentechnischer Aufwand erforderlich, welcher sich praktisch auf die Einrichtungen zur Lufterzeugung beschränkt. Es ist lediglich erforderlich, den Betrieb der Belüftung und in größeren Zeitabständen den Schlammspiegel zu kontrollieren, während ein Wartungsaufwand praktisch gar nicht notwendig ist.

## Patentansprüche

1. Klärbecken für die biologische Reinigung von Abwässern mit einem Zu- und Ablauf für das Wasser, einem bodenseitigen Asetz- und Schlammraum und oberhalb dieses Raumes angeordneten, quer zur Strömungsrichtung des Wassers sowie parallel zueinander verlaufenden, etwa von Wand zu Wand reichenden Lufteintragsrohren oder -kerzen, dadurch gekennzeichnet, daß in dem Raum oberhalb der Lufteintragsrohre (7) oder -kerzen parallel zu den Rohren und parallel zueinander angeordnete, von Beckenwand zu Beckenwand reichende Trennwände (9; 10; 17) vorgesehen sind, die sich von dem Bereich der Rohre bis zu dem Bereich der oberen Niveau- oder Überlaufebene (6) des Wassers erstrecken und wenigstens abschnittsweise gegenüber der Lotrechten von unten nach oben gesehen gegen die Einströmrichtung des Wassers geneigt verlaufen, und daß die Lufteintragsrohre oder -kerzen zur Erzeugung einer solchen Strömung des Abwassers zwischen den Trennwänden ausgebildet sind, daß eine Schlammbildung auf den Trennwänden und ein Absinken des abgebauten Schlammes erreicht wird.

2. Klärbecken nach Anspruch 1, dadurch gekennzeichnet, daß die Trennwände (9) als ebene Wände ausgebildet sind und etwa 20 bis 45° geneigt zur Lotrechten verlaufen.

3. Klärbecken nach einem der Ansprüche 1 oder 2, dadurch gekennzeichnet, daß die Trennwände (10; 17) profiliert oder gewellt so ausgebildet sind, daß sie in horizontaler Richtung verlaufende rinnenförmige Vertiefungen aufweisen.

4. Klärbecken nach einen der Ansprüche 1 bis 3, dadurch gekennzeichnet, daß die Trennwände (9; 10; 17) etwa den gleichen Abstand voneinander aufweisen und jeweils zwei oder mehr Trennwände zwischen je zwei benachbarten Lufteintragsrohren (7) angeordnet sind.

5. Klärbecken nach einem der vorhergehenden Ansprüche, dadurch gekennzeichnet, daß die Trennwände (9; 17), von unten nach oben gesehen, gegen die Einströmrichtung des Wassers geneigt verlaufen.

6. Klärbecken nach einem der vorhergehenden Ansprüche, dadurch gekennzeichnet, daß die Lufteintragsrohre (7) oder -kerzen im Bereich oberhalb der unteren Enden der Trennwände (9; 10; 17) angeordnet sind.

7. Klärbecken nach einem der vorhergehenden Ansprüche, dadurch gekennzeichnet, daß die Trennwände (9; 10; 17) unterhalb der oberen Niveau- oder Überlaufebene des Wassers enden.

8. Klärbecken nach einem der Ansprüche 1 bis 6, dadurch gekennzeichnet, daß die Trennwände (9; 10; 17) wechselweise oberhalb und unterhalb der oberen Niveau- oder Überlaufebene (6) des Wassers enden.

9. Klärbecken nach einem der Ansprüche 1 bis 6 oder 8, dadurch gekennzeichnet, daß die oberhalb der Niveau- oder Überlaufebene endenden Trennwände (9; 10; 17) in Höhe der Lufteintragsrohre (7) oder -kerzen enden und die unterhalb der Niveau- oder Überlaufebene endenden Trennwände die Lufteintragsrohre (7) oder -kerzen -nach unten hin überragen.

10. Klärbecken nach einem der vorhergehenden Anspruch, dadurch gekennzeichnet, daß zwischen der in Strömungsrichtung letzten Trennwand (9; 10; 17) und dem Ablauf (5) eine parallel zu den Trennwänden angeordnete Umlenkwand (11) vorgesehen ist.

11. Klärbecken nach einem der vorgehenden Ansprüche, dadurch gekennzeichnet, daß es als Kammer (15) eines Doppelkammerbeckens ausgebildet ist und einer vorgeordneten Vorklär- und Absetzkammer (14) über den Einlauf (4) in offener Verbindung steht.

12. Klärbecken nach einem der vorhergehenden Ansprüche, dadurch gekennzeichnet, daß die Trennwände (9; 10; 17) mit den Lufteintragsrohren (7) eine in das Becken (1) einsetzbare Baueinheit bilden.

## Claims

1. A settling tank for biologically cleaning waste water or sewage having an inflow and outflow for the water, a settling and sludge chamber on the ground side and air feed pipes or nozzles which run transversely to the direction of flow of the water as well as parallel to each other, said pipes or nozzles being arranged above said chamber, said air feed pipes or nozzles reaching approximately from wall to wall, characterized in that separating walls (9; 10; 17) are provided in the chamber above the air feed pipes (7) or nozzles, said seperating walls being arranged parallel to the pipes and parallel to each other reaching from tank wall to tank wall which separating walls extend from the region of the pipes right up to the region of the upper level or overflow plane (6) of the water and, run, at least sectionally with respect to the vertical line as seen from below upwards inclined with respect to the direction of inflow of the water, and in that the air feed pipes or nozzles are constructed in such a way as to produce such a flow of the waste water between the separating walls that a build-up of sludge at the separating walls and sinking of the sludge thus formed is achieved.

2. A settling tank according to claim 1, charecterized in that the seperating walls (9) are constructed as plane walls and run in a direction inclined to the vertical at an engle of approximately 20 to 45 degrees.

3. A settling tank according to eny one of claims 1 or 2, characterized in that the separating walls (10; 17) are constructed profiled or corrugated in such a way that they have groove-like indentations which run in the horizontel direction.

4. A settling tank according to any one of claims 1 to 3, characterized in that the separating walls (9; 10; 17) are arranged et approximately the seme distance apart from each other and in each case two or more separating walls are arranged between each two adjacent air feed pipes (7).

5. A settling tank according to any one of the preceding claims, characterized in that the separating walls (9; 17) run inclined to the inflow direction of the water, as seen from below upwards.

6. A settling tank according to any one of the preceding claims, characterized in that the air feed pipes (7) or nozzles are arranged in the region above the lower ends of the separating walls (9; 10; 17).

7. A settling tank according to any one of the preceding claims characterized in that the separating walls (9; 10; 17) end below the upper level or overflow plane of the water.

8. A settling tank according to any one of claims 1 to 6, characterized in that the separating walls (9; 10; 17) end alternately above and below the upper level or overflow plane (6) of the water.

9. A settling tank according to any one of claims 1 to 6 or 8, characterized in that the separating walls (9; 10; 17) ending above the level or overflow plane of the water end at the height of the air feed pipes (7) or nozzles and in that the separating walls ending below the level or overflow plane project downwardly beyond the air feed pipes (7) or nozzles.

10. A settling tank according to any one of the preceding claims, characterized in that a guide wall (11) is provided between the last separating wall (9; 10; 17) in the direction of flow and the outflow (5), said guide wall being arranged parallel to the separating walls.

11. A settling tank according to any one of the preceding claims characterized in that it is constructed as a chamber (15) of a double-chambered tank and is in open connection with a pre-clarifying and sedimentation chamber (14) arranged upstream via an inflow (4).

12. A settling tank according to any one of the preceding claims, characterized in that the separating walls (9; 10; 17) form constructional unit with the air feed pipes (7), which unit can be placed in the tank (1).

## Revendications

1. Bassin de décantation pour l'épuration biologique d'eaux usées, avec une arrivée et une sortie pour l'eau, une chambre de sédimentation et de dépôt des boues du côté du fond, et des tubes ou des chandelles d'amenée d'air disposées au-dessus de cette chambre qui s'étendent perpendiculairement à la direction d'écoulement de l'eau, ainsi que parallèlement entre elles, en allant sensiblement d'une paroi à l'autre, caractérisé par le fait que des cloisons (9; 10; 17) sont prévues dans la chambre au-dessus des tubes (7) ou des chandelles d'amenée d'air, cloisons qui sont disposées parallèlement aux tubes et parallèlement entre elles en allant d'une paroi à l'autre du bassin, qui s'étendent depuis la région des tubes jusqu'à celle du niveau supérieur ou du plan de trop-plein (6) de l'eau, et qui s'étendent, au moins partiellement, en étant inclinées par rapport à la verticale vers la direction d'amenée de l'eau lorsqu'on les considère de bas en haut, et que les tubes ou les chandelles d'amenée d'air sont réalisées pour engendrer un écoulement de l'eau usée entre les cloisons tel que l'on obtienne une formation de boues sur les cloisons et la descente vers le fond des boues séparées.

2. Bassin de décantation selon la revendication 1, caractérisé par le fait que les cloisons (9) sont réalisées sous la forme de parois planes et s'étendent en étant inclinées d'environ 20 à 45° par rapport à la verticale.

3. Bassin de décantation selon l'une des revendications 1 ou 2, caractérisé par le fait que les cloisons (10; 17) sont profilées ou ondulées de telle manière qu'elles présentent des renfoncements en forme de gouttières qui s'étendent en direction horizontale.

4. Bassin de décantation selon l'une des revendications 1 à 3, caractérisé par le fait que les cloisons (9; 10; 17) présentent sensiblement la même distance entre elles et que deux ou plusieurs cloisons sont disposées entre chaque paire de tubes d'amenée d'air (7) adjacents.

5. Bassin de décantation selon l'une des revendications précédentes, caractérisé par le fait que les cloisons (9; 17), vues de bas en haut, s'étendent en étant inclinées vers la direction d'amenée de l'eau.

6. Bassin de décantation selon l'une des revendications précédentes, caractérisé par le fait que les tubes (7) ou les chandelles d'amenée d'air sont disposés dans la région située au-dessus de l'extrémité inférieure des cloisons (9; 10; 17).

7. Bassin de décantation selon l'une des revendications précédentes, caractérisé par le fait que les cloisons (9; 10; 17) se terminent au-dessous du niveau supérieur ou du plan de trop-plein de l'eau.

8. Bassin de décantation selon l'une des revendications 1 à 6, caractérisé par le fait que les cloisons (9; 10; 17) se terminent alternativement au-dessus et au-dessous du niveau supérieur ou du plan de trop-plein de l'eau.

9. Bassin de décantation selon l'une des revendications 1 à 6 ou 8, caractérisé par le fait que les cloisons (9; 10; 17) qui se terminent au-dessus du niveau ou du plan de trop-plein de l'eau se terminent à la hauteur des tubes (7) ou des chandelles d'amenée d'air et que les cloisons qui se terminent au-dessous du niveau ou du plan de trop-plein de l'eau dépassent en hauteur vers le bas les tubes (7) ou les chandelles d'amenée d'air.

10. Bassin de décantation selon l'une des revendications précédentes, caractérisé par le fait qu'une paroi de déviation (11) disposée parallèlement aux cloisons est prévue entre la dernière cloison (9; 10; 17) dans la direction de l'écoulement et la sortie (5).

11. Bassin de décantation selon l'une des revendications précédentes, caractérisé par le fait qu'il est réalisé sous la forme d'une chambre (15) d'un bassin à deux chambres et qu'il est en communication directe par l'arrivée (4) avec une chambre amont (14) de prédécantation et de dépôt.

12. Bassin de décantation selon l'une des revendications précédentes, caractérisé par le fait que les cloisons (9; 10; 17) constituent avec les tubes d'amenée d'air (7) une unité qui peut être placée dans le bassin (1).

# Fig. 1

0 162 121

Fig. 2

## Fig. 3